# EUROPEAN PATENT APPLICATION

(11) **EP 3 640 010 A1**
(43) Date of publication of application: **22.04.2020**
(21) Application number: 18201346.6
(22) Date of filing: 18.10.2018
(51) Int. Cl.: B29C 64/35, B29C 64/364, B29C 64/165, B33Y 40/00, B22F 3/105

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Diller, Christian, 96215 Lichtenfels (DE)
(74) Representative: Hafner & Kohl Patent- und Rechtsanwälte Partnerschaft mbB

(57) **Abstract**

Apparatus (1) for additively manufacturing three-dimensional objects (2) by means of successive layerwise selective irradiation and consolidation of layers of a build material (3) which can be consolidated by means of an energy source, which apparatus (1) comprises an irradiation device (4) that is fixed in position, in particular with at least one static beam guiding unit, and at least one stream generating device (9) that is adapted to generate a gas stream (10) inside a process chamber (8) of the apparatus (1) that can be charged with residues (7) generated in an additive manufacturing process performed on the apparatus (1), wherein the stream generating device (9) comprises at least one stream generating unit generating a gas stream (10) over a build plane (6) between at least one stream intake (11) and at least one corresponding stream outlet (12), wherein the at least one stream intake (11) and/or the at least one stream outlet (12) are moveable relative to the build plane (6).

## Description

The invention relates to an apparatus for additively manufacturing three-dimensional objects by means of successive layerwise selective irradiation and consolidation of layers of a build material which can be consolidated by means of an energy source, which apparatus comprises an irradiation device that is fixed in position, in particular with at least one static beam guiding unit, and at least one stream generating device that is adapted to generate a gas stream inside a process chamber of the apparatus that can be charged with residues generated in an additive manufacturing process performed on the apparatus.

Apparatuses for additively manufacturing three-dimensional objects are generally known from prior art. Typically, build material is selectively and layerwise consolidated, e.g. via irradiation with an energy source, such as an energy beam, for example a laser beam or an electron beam. In typical additive manufacturing processes, such as selective laser melting or selective laser sintering, for instance, residues are present in the atmosphere of the process chamber, i.e. the chamber in which the additive manufacturing process is performed. Such residues may be generated, i.e. may already be present in the atmosphere, such as dust particles or swirled up build material particles or directly generated, e.g. smoke and smolder generated by irradiating build material.

Further, such apparatuses usually comprise a stream generating device which is adapted to generate a gas stream inside the process chamber. Via the stream generating device a gas stream can be generated, e.g. a process gas stream, usually a stream of inert gas, such as argon, that streams through the process chamber and can be charged with residues that are generated in the additive manufacturing process. Thus, the generated residues can be transported out of the process chamber via the gas stream.

As process chambers of additive manufacturing apparatuses are steadily designed larger, e.g. to manufacture larger components or larger quantities of objects, the requirements regarding the gas stream also increase. In particular, it is necessary to generate a gas stream with defined streaming properties, such as streaming velocity or flux through the entire process chamber to allow for removing residues in the entire process chamber, as build material may be irradiated in every point of a corresponding build plane, in which the build material is arranged to be irradiated inside the process chamber. Generating a gas stream that meets such increased requirements is difficult and raises other problems, such as heat that is generated by a corresponding stream generating device being able to generate such a (large volume) gas stream.

Further, residues that are generated in the additive manufacturing process, e.g. in a specific region of the build plane, are transported via the gas stream over another area of the build plane, wherein the transport path, i.e. the streaming path, of the residues over the build plane has also to be taken into calculation to avoid the irradiation of such an area over which the residues generated in another area are currently transported in the gas stream.

It is an object of the present invention to provide an apparatus for additively manufacturing three-dimensional objects, wherein the generation of the gas stream is improved, in particular to improve the removal of residues.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, as described before, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc. the gas stream may remove residues from the process chamber and may transport the residues, for example to a filter device that is adapted to separate the residues from the gas stream thereby generating a fresh gas stream that can be fed into the process chamber again. Thus, a closed loop can be generated.

As described before, the inventive apparatus comprises an irradiation device which is fixed in position, i.e. which cannot be moved relative to be moved relative to the build plane. The irradiation device may comprise a beam guiding unit, e.g. a scanner, such as a scanning mirror, which is adapted to guide the energy beam across the build plane, e.g. by moving the mirror. The beam guiding unit as such is not moved relative to the build plane, but the angle or the orientation is changed to guide the energy beam. The invention is based on the idea that the stream generating device comprises a stream generating unit generating a gas stream over a build plane between at least one stream intake and at least one corresponding stream outlet, wherein the at least one stream intake and/or the at least one stream outlet are moveable relative to a build plane. Thus, it is inventively achieved that the gas stream does not have to be generated over the entire build plane and thereby, through the entire process chamber at the same time, but it is possible to generate the gas stream between at least one stream intake and at least one stream outlet, wherein the at least one stream intake and/or the at least one stream outlet can be moved relative to the build plane. Hence, a "window" is generated through which build material can be irradiated which build material is arranged in the build plane. The "window" can be moved relative to the build plane or can be enlarged/reduced with the at least one stream intake and/or the at least one stream outlet being moved relative to the build plane.

Thus, it is sufficient to generate the gas stream between the stream intake and the (corresponding) stream outlet that can be moved relative to the build plane, wherein the gas stream can be generated in the area over the build plane in which residues are currently generated. For example, the area between the at least one stream intake and the at least one stream outlet can be moved to a region of the build plane in which build material is to be irradiated or, i.e. in which residues are currently present in the additive manufacturing process. This allows for generating the gas stream in proximity to the melt pool, i.e. a region of the build plane in which the build material is directly irradiated via the energy beam to "melt", i.e. to consolidate, the build material.

Correspondingly, a comparatively shorter streaming path, which particularly does not have to stream through the entire process chamber, can be generated, wherein over the comparatively short streaming path a gas stream with improved streaming properties can be generated. For example, generating the gas stream that is streaming along a shorter streaming path involves much less effort than generating the gas stream with the same streaming properties streaming through the entire process chamber. Hence, a less complex and less costly stream generating device may be sufficient to generate the gas stream.

The movement of the at least one stream intake and/or the at least one stream outlet relative to the build plane may be understood as (translational) movement along a machine axis, for example in coating direction, i.e. the direction in which an application element is moved to convey and distribute build material. Of course, any arbitrary movement pattern can be performed with the at least one stream intake and/or the at least one stream outlet relative to the build plane, wherein a translational movement pattern parallel to the build plane may be deemed as preferred movement pattern.

Further, it is possible to move either the at least one stream intake or the at least one stream outlet relative to the build plane, wherein the stream intake or the stream outlet are fixed in position and the other component, i.e. the stream intake or the stream outlet, can be moved relative to the build plane. Of course, it is also possible to move both, the stream intake and the corresponding stream outlet, for example synchronously or even relative to each other.

According to a first embodiment of the inventive apparatus, the at least one stream intake and/or the at least one stream outlet form at least one streaming area that is moveable relative to the build plane or adjustable in size by moving the at least one stream intake and/or the at least one stream outlet relative to the build plane. Thus, at least one streaming area can be formed between the at least one stream intake and the corresponding stream outlet, wherein the gas stream streams from the stream intake to the stream outlet, thereby forming the streaming area over the build plane in which streaming area the gas stream can be loaded with generated residues.

The at least one stream intake and/or the at least one stream outlet may be moved relative to the build plane, wherein a relative movement between the stream intake and the stream outlet relative to the build plane generates a movement of the streaming area relative to the build plane, e.g. forming a "window" that is moved relative to the build plane. It is also possible to adjust the size of the streaming area by moving the stream intake and the stream outlet relative to each other or changing the relative position between the stream intake and the corresponding stream outlet, respectively. Thus, the size of the "window" can be adjusted as necessary.

Advantageously, an irradiation device may be adapted to irradiate build material in the at least one streaming area between the at least one stream intake and the at least one stream outlet, in particular between at least two stream elements, preferably between a stream element arranged at the application element and a preceding or succeeding stream element. Hence, the irradiation device may be adapted to use or comprise an energy source, for example generating an energy beam, wherein the energy beam can be selectively guided over the build plane. The energy beam can in particular be guided in that build material is irradiated in the at least one streaming area that is arranged above the build plane. Thus, residues that are generated due to the irradiation of build material are properly removed from the process chamber, as the residues are directly generated within the streaming area in which the gas stream is generated streaming from the at least one stream intake which is built as or comprised in a stream element to the corresponding stream outlet which is built as or comprised in a corresponding stream element.

In other words, build material is irradiated in the at least one streaming area to ensure that residues that are generated due to the irradiation process are directly transported out of the process chamber and thereby, removed from the process chamber via the gas stream that is generated in the streaming area. Thus, the streaming area forms a "window" for the irradiation device to generate or guide, respectively, the energy beam and irradiate build material through the "window". The window may be spanned between the two stream elements, wherein one may be arranged on an application element and the other may be arranged preceding or succeeding to the application element. The terms "preceding" and "succeeding" refer to the movement of the application element in application direction.

In particular, the streaming area may be generated between at least two stream elements, for example a stream intake and a corresponding stream outlet, wherein it is particularly preferred that the streaming area is generated between an application element and a preceding and/or a succeeding stream element. Thus, the at least two stream elements may be arranged and/or moved and/or positioned with respect to an application element that is used for applying build material on the build plane. Thus, it is possible to generate the streaming area preceding or succeeding with respect to the application element, thereby allowing for irradiating build material in advance or in succession to an application step in which fresh build material is applied onto the previously applied and /or selectively consolidated layer of build material.

For example, a "window" is generated preceding the application element, wherein material is selectively irradiated through the "window" and a fresh layer of build material is applied via the application element that succeeds the "window". Alternatively or additionally, it is possible to irradiate build material through a streaming area that succeeds the application element, wherein the application element applies a fresh layer of build material, wherein build material is irradiated in the streaming area that is moved relative to the build plane and thereby, over the freshly applied layer of build material. Of course, an arbitrary combination of streaming areas that are moved arbitrarily relative to the build plane and/or with and/or relative to the application element is possible.

To irradiate build material through the "window", the irradiation device may be adapted to irradiate build material between the at least one stream intake and the at least one stream outlet coordinated with a movement of the at least one stream intake and/or the at least one stream outlet, in particular coordinated with a movement of the at least one application element, and/or the stream generating device or an application unit is adapted to move the at least one stream intake and/or the at least one stream outlet, in particular at least one application element, coordinated with an irradiation process step performed via the irradiation device. Thus, it is possible to generate and guide the energy beam dependent on a movement or a position (and a variation thereof) of the at least one stream intake and the at least one stream outlet. It is also possible to control a movement of the at least one stream intake and the at least one stream outlet dependent on the irradiation process, i.e. dependent on a movement of the energy beam across the build plane. Advantageously, it is possible to reduce down times of the apparatus, as build material can be irradiated during application steps in which fresh build material is applied.

According to another embodiment of the inventive apparatus, the at least one stream intake and/or the at least one stream outlet may be movable dependent on a movement of at least one application element that is adapted to apply build material on the build plane, in particular movable synchronous with the application element. As described before, it is possible to generate the streaming area with respect to the application element, in particular to the position and/or the movement of the streaming area or dependent on an adjustment to the streaming area. For example, the adjustment of the size of the streaming area, can be performed dependent on a movement of the at least one application element.

For example, it is feasible to move the streaming area over a region of the build plane in which build material has been applied via the application element, thereby forming a fresh layer of build material that can be irradiated through the streaming area. Preferably, the streaming area is generated synchronously moving with the application element allowing for an irradiation process that can be performed synchronous with the application process. Thus, it is possible to generate a streaming area that precedes and/or succeeds the application element therefore, allowing for parallel irradiation of build material, while build material is applied on the build plane. At the same time, it is ensured that the residues that are generated due to the irradiation of build material are directly transported out of the process chamber via the streaming area, i.e. the gas stream that is generated between the at least two stream elements, e.g. a stream intake and a corresponding stream outlet.

Preferably, the at least one stream intake and/or stream outlet may be movable together with the application element and/or in advance to the application element and/or in succession to the application element. It is particularly possible to arrange a corresponding stream intake and/or a corresponding stream outlet relative to the application element or on the application element to provide streaming areas, as described before. Thus, an arbitrary movement of streaming areas relative to or together with the application element can be generated to allow for providing streaming areas wherever build material is to be irradiated and residues are generated.

The inventive apparatus may further be improved in that the at least one stream intake and/or the at least one stream outlet are built as separate stream elements. For example, at least one stream element may be built as a frame that precedes or succeeds the at least one application element. The stream elements, therefore, are built separately to any other component of the apparatus, wherein it is possible to move the separate stream elements together with other components of the apparatus, such as the at least one application element, or couple the movement of the separate stream elements to a movement of another component of the apparatus, such as the application element. The application element may therefore, be coupled with a stream element that is for example built as a frame that extends in application direction or against application direction, thereby allowing for the generation of a streaming area in advance to or following the application element. The separate stream elements may therefore, be coupled with the application element in that a constant or fixed streaming area can be generated between the application element and the stream elements.

Preferably, the at least one stream intake and/or the at least one stream outlet may be integrated in the at least one application element. For example the application element may comprise a means through which the gas stream can be guided and therefore, a part of the application element may function as a stream intake and/or a stream outlet. For example, the gas stream may be guided through a stream intake and/or a stream outlet that is integrated into the at least one application element and the corresponding stream outlet or stream intake may be arranged in a fixed or movable separate stream element allowing for the generation of a streaming area between the stream element integrated into the at least one application element and the at least one corresponding separate stream element. A stream element integrated into the application element may for example be formed as channel extending through the application element. The stream element may be connected to a corresponding means to generate the gas stream, such as a suction and/or blower unit.

An arbitrary combination of the arrangement of stream intakes and stream outlets integrated or separate to the application element is feasible. For example, a stream element may be integrated into the application element, wherein corresponding stream elements or at least one corresponding stream element, respectively, can be arranged in a fixed or movable position relative to the build plane, for example at the edge of the build plane. Thereby, a streaming area can be generated between the application element and the edge of the build plane.

It is also possible to have at least one separate stream element mounted to the application element, wherein the streaming area can be generated between the stream element that is mounted to the application element (or synchronously moved relative to the build plane together with the application element) and the corresponding stream element that is integrated into the application element. In particular, the application element may comprise two stream elements, wherein the corresponding stream elements can be arranged to different sides of the application element in and against application direction, therefore, generating two streaming areas, wherein a first streaming area succeeds and a second streaming area precedes the application element, with respect to the application direction.

Further, at least one jet generating unit may be adapted to generate a jet of gas inside the process chamber of the apparatus, wherein at least one jet intake and at least one jet outlet are provided between which the jet can be generated, preferably in parallel to the gas stream. The jet may be generated via the stream generating device, e.g. via the same or a different stream generating unit that is part of the stream generating device with which the gas stream is generated. Of course, it is also possible to have a separate stream generating device for generating the jet.

A corresponding jet generating unit may be adapted to generate the jet with jet streaming properties that are different from the streaming properties of the at least one gas stream, in particular with a higher streaming velocity or a higher stream rate. As described before, the jet may be generated streaming in parallel to the gas stream, for example the corresponding jet elements, in particular the jet intake and the corresponding jet outlet, may be arranged above the stream intake and the stream outlet of the gas stream streaming in parallel to the jet. As the jet may be generated with different streaming properties, it is possible to use the jet for removing different kinds of residues than the gas stream is used for. As the jet may be generated streaming faster, i.e. with a higher streaming velocity or a higher stream rate, than the gas stream, it is possible to remove other residues, for example heavier residues, such as conglomerates of build material particles or spatters that are generated in the additive manufacturing process, for instance.

Thus, the jet may be generated in parallel to the streaming area, wherein if spatters or other heavy residues are generated or present in the additive manufacturing process, those heavy residues do not fall back on the build plane thereby, negatively influencing the process quality or the object quality, but those heavy residues are removed from the process chamber via the jet. The jet may specifically be generated with regard to a type of residues, such as spatters or conglomerates of build material particles generated in the additive manufacturing process.

Additionally, the at least one jet intake and/or the at least one jet outlet may be movable relative to the build plane. Thus, all features, details and advantages that are described with respect to the at least one stream intake and/or the at least one stream outlet being movable relative to the build plane can fully be transferred to the at least one jet intake and/or the at least one jet outlet being movable relative to the build plane. Thus, the jet may also be generated in a "jet area" streaming over the build plane, in particular streaming over and in parallel to the streaming area, wherein the streaming area may be used to remove

(lighter) residues that are generated in the additive manufacturing process, such as dust, smoke and smolder and the jet may be used to remove (heavier) residues, such as spatters and conglomerates of build material particles. Of course, it is also possible to selectively use the gas stream and the jet, as required, wherein, for example, the jet may only be used (generated or guided into the process chamber) in different situations of the additive manufacturing process, for example in which a generation of spatters is probable. Besides, the at least one gas stream and the at least one jet may be generated following the same or a different streaming path.

According to another embodiment of the inventive apparatus, the at least one jet intake and/or the at least jet outlet are built as separate jet elements or integrated in the at least one application element, in particular coupled with the at least one stream intake and/or the at least one stream outlet. Thus, it is possible, as already described before with respect to the at least one stream intake and/or the at least one stream outlet, which part of the specification is fully transferable to the current embodiment, to have at least one jet intake and/or at least one jet outlet being built as separate jet elements or being integrated in the at least one application element.

Again, an arbitrary combination of jet intakes and/or jet outlets built as separate elements or integrated in the at least one application element is feasible. Particularly, it is possible to form an assembly of an application element being coupled with at least one stream intake and/or jet intake and the corresponding stream outlet and/or jet outlet. For example, each of the stream elements or jet elements may be arranged integrated in the application element or integrated in separate elements that can be built, for example, as frame that is coupled with the application element.

The inventive apparatus may further be improved in that the application unit comprises at least two application elements, wherein the stream generating device is adapted to generate a stream and/or a jet between the at least two application elements. Thus, the inventive apparatus may comprise an application unit with at least two application elements that can be used to apply build material onto the build plane. The at least two application elements are preferably moveable over the build plane in series, wherein a succeeding application element applies a layer of build material onto a previously applied layer which has been applied via the preceding application element. The stream generating device according to this embodiment, may be adapted to generate the stream and/or the jet between those two application elements, wherein an arbitrary number of application elements that can be moved in series over the build plane is feasible.

Thus, the streaming area or the jet area is generated between the two application elements allowing for an irradiation of the build material arranged in the build plane through the streaming area / jet area. For example, a first application element may apply a layer of build material onto a previously applied layer of build material or on a build plate carrying the build material, wherein the applied layer of build material may be irradiated via an energy beam, for instance, through the streaming area that is generated between the two application elements. The second application element directly applies another layer of build material onto the previously applied and selectively irradiated layer of build material that has been applied via the first application element and afterwards been irradiated via the energy beam.

Further, it is possible to have another streaming area between a separate stream element and the second application element, for instance, allowing for an irradiation of the second layer of build material that has been applied via the second application element. Of course, providing further stream elements or jet elements, preceding or succeeding one or both of the application elements is possible. In particular, the provision of different stream elements or jet elements, separately or integrated into one or more of the application elements may be chosen dependent on a process parameter, such as the irradiation strategy.

According to another embodiment of the inventive apparatus, at least one stream intake and/or jet intake may be arranged in a first application element and at least one corresponding stream outlet and/or jet outlet may be arranged in a second application element preceding or succeeding the first application element. Thus, streaming areas or jet areas may be generated between the two application elements allowing for an irradiation of build material through the "window" generated between the two application elements. Of course, an arbitrary number of application elements may be used that can be moved in series over the build plane, for example three application elements, wherein between each pair of application elements a corresponding streaming area and/or jet area, e.g. "window", maybe generated to allow for a removal of residues generated proximate to the melt pool.

Alternatively or additionally, at least one stream intake or at least one stream outlet and/or at least one jet intake or at least one jet outlet may be fixed in position. For example, at least one stream element or at least one jet element may be provided that is fixed in position, for example at the edge of the build plane. The corresponding stream element or jet element may be movable relative to the build plane, thereby generating the stream area or the jet area between the movable stream element or jet element and the fixed stream element or jet element, respectively.

Besides, the invention relates to a stream generating device for an apparatus for additively manufacturing three-dimensional objects, in particular an inventive apparatus, as described before, wherein the stream generating device comprises a stream generating unit with at least one stream intake and at least one stream outlet, wherein at least one stream intake and/or at least one stream outlet are moveable relative to a build plane.

Further, the invention relates to a method for operating an apparatus for additively manufacturing three-dimension objects, in particular an inventive apparatus, as described before, wherein a gas stream is generated via a stream generating unit streaming between at least one stream intake of the stream generating unit and at least one stream outlet of the stream generating unit, wherein the at least one stream intake and/or the at least one stream outlet are moved relative to a build plane.

Exemplary embodiments of the invention are described with reference to the Fig. The Fig. are schematic diagrams, wherein
- Fig. 1: shows an inventive apparatus according to a first embodiment;
- Fig. 2: shows a top view of the inventive apparatus of Fig. 1;
- Fig. 3: shows an inventive apparatus according to a second embodiment;
- Fig. 4: shows a side view of the inventive apparatus of Fig. 3;
- Fig. 5: shows an inventive apparatus according to a third embodiment; and
- Fig. 6: shows a side view of the inventive apparatus of Fig. 5.

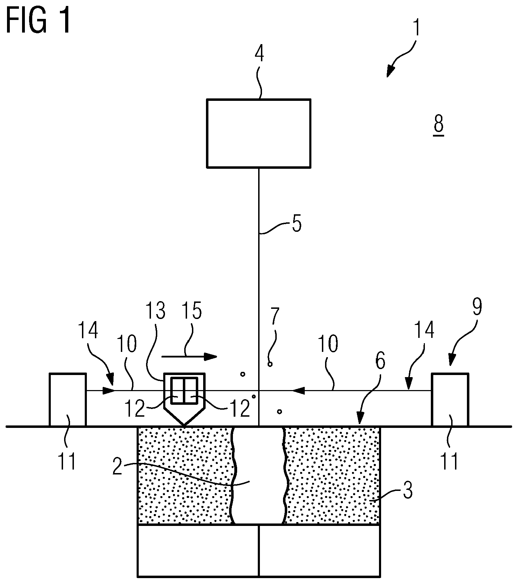

Fig. 1 shows an apparatus 1 for additively manufacturing three-dimensional objects 2 by means of successive layerwise selective irradiation and consolidation of layers of a build material 3 which can be consolidated by means of an energy source. The apparatus 1 comprises an irradiation device 4 that is fixed in position and comprises an energy source (not shown) that is adapted to generate an energy beam 5, such as a laser beam or an electron beam. The energy beam 5 can be selectively guided over a build plane 6 to irradiate the build material 3 corresponding to the geometry or the shape of an object 2 to be additively manufactured.

The irradiation of build material 3 via the energy beam 5 generates residues 7, such as smoke and smolder. Further, build material particles, in particular non-consolidated build material or dust can also be present inside a process chamber 8 in which the additive manufacturing process is performed. The apparatus 1 comprises a stream generating device 9 that is adapted to generate a gas stream 10 streaming through the process chamber 8, in particular above the build plane 6. The stream generating device 9 comprises two stream intakes 11 and two stream outlets 12. Thus, the gas streams 10 are generated streaming from the corresponding stream intake 11 to the corresponding stream outlet 12.

As can be derived from Fig. 1, the stream intakes 11 are fixed in position, whereas the stream outlets 12 can be moved relative to the build plane 6. In particular, the stream outlets 12 are integrated into an application element 13 of an application unit (not shown). Thus, streaming areas 14 are generated between each stream intake 11 and the corresponding stream outlet 12, wherein the size of the respective streaming area 14 is adjusted dependent on the position of the application element 13. The energy beam 5 may irradiate the build material 3 arranged in the build plane 6 in advance to and/or after the application element 13 applied a new layer of build material 3 in the build plane 6. Thus, the gas streams 10 may be generated in that the gas streams 10 meet defined stream properties, such as stream velocity and/or stream rate. Due to the spatially limited extent compared with gas streams that typically stream through the entire process chamber 8, the streaming device 9 may be reduced in size or power, respectively.

Hence, it is possible that the energy beam 5 may irradiate build material 3 spatially before or after the application element 13 (in application direction 15). Of course, the indicated streaming paths can also be reverted, or arbitrarily chosen, wherein each stream intake 11 may be deemed as stream outlet 12 and each stream outlet 12 may correspondingly be deemed as a stream intake 11, arbitrarily. In other words, the direction in which the gas streams 10 are streaming can be chosen arbitrarily, e.g. reverted.

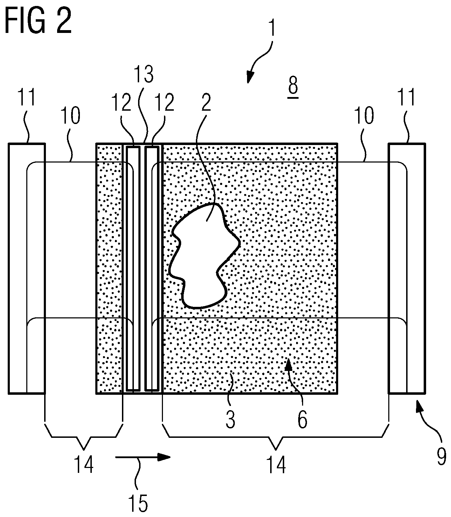

Fig. 2 shows a top view of the apparatus 1 of Fig. 1, wherein the application element 13 is moved in application direction 15 to apply a fresh layer of build material 3 in the build plane 6. In this exemplary embodiment, two streaming areas 14 are formed between the application element 13 and the respective stream intake 11. As can be derived from Fig. 2, the gas stream 10 streams from the stream intakes 11 to the corresponding stream outlets 12 that are integrated into the application element 13. Thus, the stream generating device 9 may generate gas streams 10 that are fed into the process chamber 8, where the gas streams 10 streams into the process chamber 8 through the stream intakes 11 towards the stream outlets 12. From the stream outlets 12 the gas streams 10 that may be charged with residues 7 can be removed from the process chamber 8 and, for example, fed into a filter device (not shown) that is adapted to clean the gas streams 10 from residues 7, i.e. separate residues 7 from the gas streams 10.

From the filter device it is possible to re-feed the (cleaned) gas streams 10 back into the process chamber 8 through the stream intake 11. Of course, the position and the function of the stream intakes 11 and stream outlets 12 can be reversed in that the stream intakes 11 can be arranged in the application element 13 and the stream outlets 12 can be arranged next to the build plane 6. Further, one stream outlet 12 and one stream intake 11 can be arranged in the application element 13, wherein the corresponding stream intake 11 and a stream outlet 12 can be arranged next to the build plane 6.

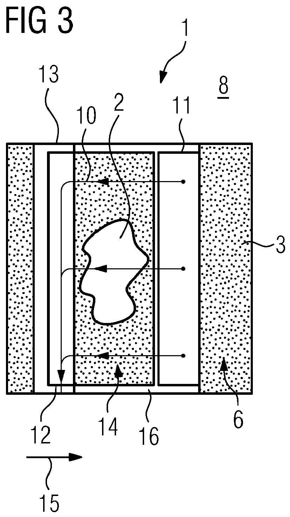

Fig. 3 shows an inventive apparatus 1 according to a second embodiment. The apparatus 1 also comprises an application element 13 that is movable relative to a build plane 6 in which build material 3 is arranged to be selectively irradiated via the energy beam 5 (not shown). The stream generating device 9 is not shown in this embodiment, wherein a stream intake 11 is provided that is arranged on a frame 16 that is coupled with the application element 13. Further, a stream outlet 12 is arranged in the application element 13, i.e. integrated into the application element 13. Thus, a gas stream 10 is generated streaming over the streaming area 14 between the stream intake 11 and the stream outlet 12. Of course, as described before, the position of the stream intake 11 and the stream outlet 12 can also be reversed. Further, multiple stream intakes 11 and/or multiple stream outlets 12 can be provided, for example another frame 16 can be provided extending against application direction 15 and can be coupled with the application element 13 to provide a second streaming area 14, for instance.

And, as the application element 13 is moved over the build plane 6, a fresh layer of build material 3 can be applied on the build plane 6, which can be selectively irradiated via the energy beam 5 through the streaming area 14. Residues 7 that are generated due to the irradiation process can be transported out of the process chamber 8 via the gas stream 10 that is arranged above the build plane 6 while build material 3 is irradiated. Therefore, the gas stream 10 can be charged with residues 7 that are generated in the irradiation process, wherein the gas stream 10 can transport the residues 7 directly from where they are generated, avoiding the residues 7 negatively impacting other irradiation processes or other process steps of the additive manufacturing process.

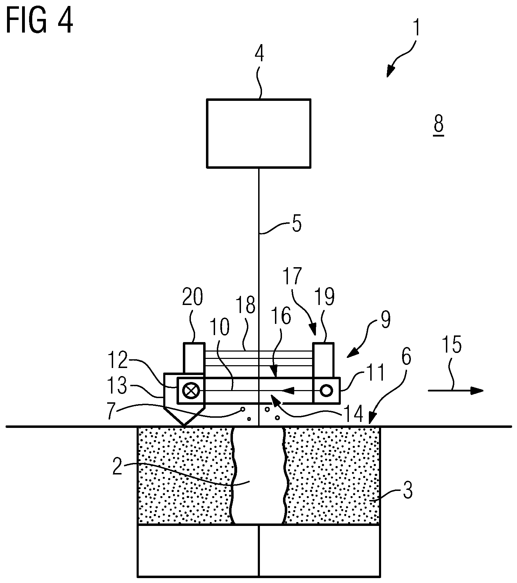

Fig. 4 shows a side view of the apparatus 1 of Fig. 3. As described before, the frame 16 is attached to the application element 13, in that a stream outlet 12 that is integrated into the application element 13 and a stream intake 11 that is integrated into the frame 16 between which the gas stream 10 is generated form a streaming area 14. Thus, residues 7 that are generated due to the irradiation of build material 3 via the energy beam 5 can directly be transported via the gas stream 10 out of the process chamber 8. The irradiation device 4 is thereby, adapted to irradiate through the "window" that is provided via the streaming area 14.

Additionally, the stream generating device 9 comprises a jet generating unit 17 that is adapted to generate a jet 18 streaming between a jet intake 19 and a jet outlet 20. The jet 18 differs from the gas stream 10 in the stream properties of the jet 18. For example, the jet 18 may stream faster and with a higher stream rate than the gas stream 10. The jet generating unit 17 and the part of the stream generating device 9 that is adapted to generate the gas stream 10 are arranged in parallel, in particular the jet generating unit 17 is arranged above the stream intake 11 and the stream outlet 12. Heavier residues 7, such as spatters and build material particle conglomerates may be received with the jet 18 or the jet 18 may be charged with those particles, respectively, in that they can be transported out of the process chamber 8 and do not fall back on the build plane 6.

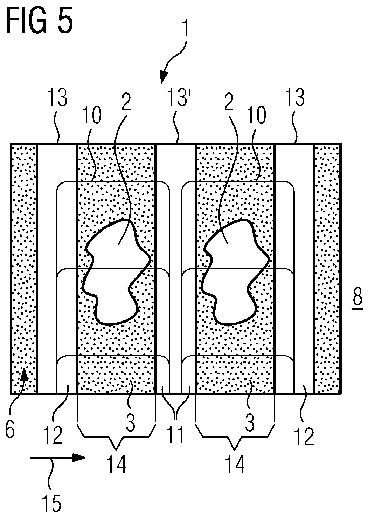

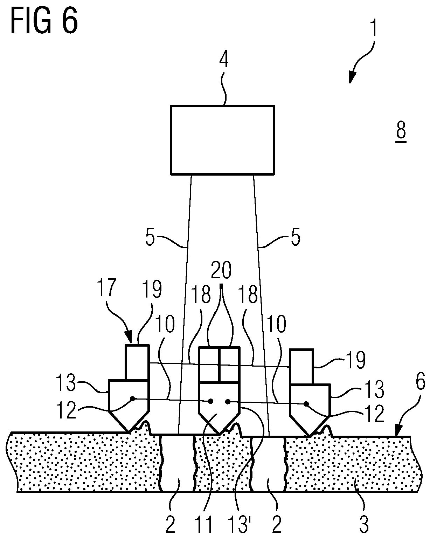

Fig. 5 and 6 show an apparatus 1 according to a third embodiment, wherein the apparatus 1 comprises three application elements 13, 13' that can be moved in application direction 15 over the build plane 6. According to this exemplary embodiment, the application element 13' comprises two stream inlets 11, whereas the application elements 13 comprise a stream outlet 12, each. Thus, gas streams 10 can be generated streaming from the application element 13' to the application elements 13, in particular from the stream intakes 11 to the stream outlets 12. Thus, streaming areas 14 can be generated between the application elements 13' and 13. Thus, it is possible to have the energy beam 5 irradiate build material 3 through the streaming area 14 in that residues 7 that are generated due to the irradiation process can be moved via the gas streams 10 out of the process chamber 8. The irradiation device 4 may also be adapted to generate two energy beams 5 to simultaneously irradiate build material 3 through both streaming areas 14. In particular, it is possible to adapt or adjust the velocity via which the application elements 13, 13' are moved over the build plane 6 to allow for a proper irradiation of build material 3 via the energy beams 5 through the streaming areas 14.

As indicated in Fig. 6, a jet generating device 17, as described before, being adapted to generate jets 18 between jet intakes 19 and jet outlets 20 may be arranged on top of the application elements 13, as described with respect to Fig. 4. Thus, it is possible to apply a first layer of build material via the first application element 13, wherein the build material that has been applied by the first application element 13 can be irradiated via the energy beam 5 through the first streaming area 14. Subsequently, a second layer of build material is applied onto the first layer via the succeeding second application element 13', wherein the freshly applied layer of build material 3 can be irradiated via the second energy beam 5 before the next layer of build material is applied via the third application element 13. Of course, the third layer of build material can also be irradiated via the energy 5.

Self-evidently, all features, details and advantages that are described with respect to the single embodiments can arbitrarily be combined. In particular, it is possible to have each stream intake 11 and the corresponding stream outlet 12 or each jet intake 19 and jet outlet 20 arbitrarily arranged and positioned, in particular integrated into an application element 13 or any other arbitrary structure of the apparatus 1 or coupled to a separate element, such as a frame 16. Further, additional fixed stream intakes 11 or stream outlets 12 or jet intakes 19 or jet outlets 20 can be arranged in the process chamber 8, e.g. next to the build plane 6, as depicted in Fig. 2. The streaming path of the jet 18 and/or the gas stream 10 can be reverted or arbitrarily oriented in each embodiment. Of course, the inventive method may be performed on each of the inventive apparatuses 1.

## Claims

1. Apparatus (1) for additively manufacturing three-dimensional objects (2) by means of successive layerwise selective irradiation and consolidation of layers of a build material (3) which can be consolidated by means of an energy source, which apparatus (1) comprises an irradiation device (4) that is fixed in position, in particular with at least one static beam guiding unit, and at least one stream generating device (9) that is adapted to generate a gas stream (10) inside a process chamber (8) of the apparatus (1) that can be charged with residues (7) generated in an additive manufacturing process performed on the apparatus (1), **characterized in that** the stream generating device (9) comprises at least one stream generating unit generating a gas stream (10) over a build plane (6) between at least one stream intake (11) and at least one corresponding stream outlet (12), wherein the at least one stream intake (11) and/or the at least one stream outlet (12) are moveable relative to the build plane (6).

2. Apparatus according to claim 1, **characterized in that** the at least one stream intake (11) and/or the at least one stream outlet (12) form at least one streaming area (14) that is moveable relative to the build plane (6) or adjustable in size by moving the at least one stream intake (11) and/or the at least one stream outlet (12) relative to the build plane (6).

3. Apparatus according to claim 2, **characterized in that** the irradiation device (4) is adapted to irradiate build material (3) in the at least one streaming area (14) between the at least one stream intake (11) and the at least one stream outlet (12), in particular between at least two stream elements (11, 12), preferably between an application element (13, 13') and a preceding or succeeding stream element (11, 12).

4. Apparatus according to claim 3, **characterized in that** the irradiation device (4) is adapted to irradiate build material (3) between the at least one stream intake (11) and the at least one stream outlet (12) coordinated with a movement of the at least one stream intake (11) and/or the at least one stream outlet (12), in particular coordinated with a movement of the at least one application element (13, 13'), and/or the stream generating device (9) or an application unit is adapted to move the at least one stream intake (11) and/or the at least one stream outlet (12), in particular at least one application element (13, 13'), coordinated with an irradiation process step performed via the irradiation device (4).

5. Apparatus according to one of the preceding claims, **characterized in that** the at least one stream intake (11) and/or the at least one stream outlet (12) is moveable dependent on a movement of at least one application element (13, 13') that is adapted to apply build material (3) on the build plane (6), in particular moveable synchronous with the application element (13, 13').

6. Apparatus according to claim 5, **characterized in that** the at least one stream intake (11) and/or stream outlet (12) is moveable together with the application element (13, 13') and/or in advance to the application element (13, 13') and/or in succession to the application element (13, 13').

7. Apparatus according to one of the preceding claims, **characterized in that** the at least one stream intake (11) and/or the at least one stream outlet (12) are built as separate stream elements (11, 12).

8. Apparatus according to one of the preceding claims, **characterized in that** the at least one stream intake (11) and/or the at least one stream outlet (12) are integrated in at least one application element (13, 13').

9. Apparatus according to one of the preceding claims, **characterized by** at least one jet generating unit (17) that is adapted to generate a jet (18) of gas inside the process chamber (8) of the apparatus (1), wherein at least one jet intake (19) and at least one jet outlet (20) are provided between which the jet (18) is generated, preferably in parallel to the gas stream (10).

10. Apparatus according to claim 9, **characterized in that** the jet generating unit (17) is adapted to generate the jet (18) with jet streaming properties that are different from the streaming properties of the at least one gas stream (10), in particular with a faster streaming velocity or a higher stream rate.

11. Apparatus according to claim 9 or 10, **characterized in that** the at least one jet intake (19) and/or the at least one jet outlet (20) are moveable relative to the build plane (6).

12. Apparatus according to one of the claims 9 to 11, **characterized in that** the at least one jet intake (19) and/or the at least one jet outlet (20) are built as separate jet elements or are integrated in the at least one application element (13, 13'), in particular coupled with the at least one stream intake (11) and/or the at least one stream outlet (12).

13. Apparatus according to one of the preceding claims, **characterized in that** the application unit comprises at least two application elements (13, 13'), wherein the stream generating device (9) is adapted to generate a gas stream (10) and/or a jet (18) between the at least two application elements (13, 13').

14. Apparatus according to one of the preceding claims, **characterized in that** at least one stream intake (11) and/or jet intake (19) is arranged on a first application element (13, 13') and at least one corresponding stream outlet (12) and/or jet outlet (20) is arranged on a second application element (13, 13') preceding or succeeding the first application element (13, 13').

15. Stream generating device (9) for an apparatus (1) for additively manufacturing three-dimensional objects (2), in particular an apparatus (1) according to one of the preceding claims, **characterized in that** the stream generating device (9) comprises a stream generating unit with at least one stream intake (11) and at least one stream outlet (12), wherein at least one stream intake (11) and/or at least one stream outlet (12) are moveable relative to a build plane (6).

16. Method for operating an apparatus (1) for additively manufacturing three-dimension objects (2), in particular an apparatus (1) according to one of the claims 1 to 14, **characterized in that** a gas stream (10) is generated via a stream generating unit streaming between at least one stream intake (11) of the stream generating unit and at least one stream outlet (12) of the stream generating unit, wherein the at least one stream intake (11) and/or the at least one stream outlet (12) are moved relative to a build plane (6).
